# EUROPÄISCHE PATENTSCHRIFT

(11) **EP 2 382 589 B1**
(45) Veröffentlichungstag und Bekanntmachung des Hinweises auf die Patenterteilung: **26.06.2013**
(21) Anmeldenummer: 09801976.3
(22) Anmeldetag: 22.12.2009
(51) Int. Cl.: B65C 9/00

(54) **KENNZEICHNEN EINES PRODUKTES**
IDENTIFICATION OF A PRODUCT
MARQUAGE D'UN PRODUIT

(30) Priorität: 23.12.2008 DE 102008062907
(43) Veröffentlichungstag der Anmeldung: 02.11.2011
(73) Patentinhaber: Giesecke & Devrient GmbH, 81677 München (DE)
(72) Erfinder: FIEDLER, Michael, 81369 München (DE)
(86) Internationale Anmeldenummer: PCT/EP2009/067774
(87) Internationale Veröffentlichungsnummer: WO 2010/072778

(56) Entgegenhaltungen:
- EP-A1- 1 589 452
- EP-A2- 0 573 751
- EP-A2- 0 585 932
- WO-A1-99/17486
- WO-A1-2009/002965
- GB-A- 2 314 658
- JP-A- 7 319 965
- JP-A- 2007 133 719
- US-A1- 2004 199 778
- US-A1- 2004 260 665
- US-A1- 2005 055 319
- HAIST T ET AL: "Optical detection of random features for high security applications", OPTICS COMMUNICATIONS, NORTH-HOLLAND PUBLISHING CO. AMSTERDAM, NL, vol. 147, no. 1-3, 1 February 1998 (1998-02-01), pages 173-179, XP004118061, ISSN: 0030-4018, DOI: 10.1016/S0030-4018(97)00546-4

## Beschreibung

Die vorliegende Erfindung betrifft ein Verfahren zum Kennzeichnen eines Produkts sowie eine dementsprechende Kennzeichnungsvorrichtung.

Das Dokument US-A-2004/0260665 offenbart den Oberbegriff von Anspruch 1.

Üblicherweise werden hergestellte Produkte im Rahmen des Herstellungsprozesses mit einer eindeutigen Produktkennzeichnung bzw. Produktidentifikation versehen, über die beispielsweise die Echtheit des Produktes verifiziert werden kann. Üblicherweise werden dazu Produktkennzeichnungen bzw. -identifikationen in Form von digitalen Kodierungen verwendet, die ein eindeutiges Identifizieren des betreffenden Produktes erlauben, zum Beispiel Ziffern- oder Zeichenfolgen, eindimensionale oder zweidimensionale Barcodes oder dergleichen. Derartige eindeutige Kodierungen werden häufig getrennt von dem eigentlichen Produktherstellungsprozess im Voraus bestimmt und später auf dem jeweiligen Produkt angebracht. Zu Verifikationszwecken wird die Produktidentifikation nach der Kennzeichnung des Produkts wieder ausgelesen, um die auslesbare Produktidentifikation in einer zentralen Produktdatenbank als im Umlauf befindliche Produktidentifikation zu hinterlegen bzw. zu registrieren.

Ein derartiges Kennzeichnungsverfahren erfordert jedoch die Vertrauenswürdigkeit jedes einzelnen Beteiligten. Andernfalls ist es sowohl möglich, gültige Produktidentifikationen zu entwenden und mit gefälschten Produkten in Verkehr zu bringen, als auch gefälschte Produktidentifikationen in den Kennzeichnungsprozess einzubringen und damit echte Produkte zu kennzeichnen.

Demzufolge ist es die Aufgabe der vorliegenden Erfindung, ein Kennzeichnungsverfahren vorzuschlagen, das derartige Manipulationsmöglichkeiten vermeidet.

Diese Aufgabe wird erfindungsgemäß durch ein Verfahren sowie eine Vorrichtung mit den Merkmalen der.unabhängigen Ansprüche gelöst. Die davon abhängigen Ansprüche beschreiben vorteilhafte Ausgestaltungen und Weiterbildungen der Erfindung.

Beim Kennzeichnen eines Produkts wird das Produkt zunächst mit einer bereitgestellten, eindeutigen Produktidentifikation durch eine Kennzeichnungseinrichtung gekennzeichnet. Unmittelbar anschließend wird die Produktidentifikation auf dem Produkt durch eine Erfassungseinrichtung erfasst und in einer Produktdatenbank als in Umlauf gebrachte Produktidentifikation abgelegt. Erfindungsgemäß wird neben der Produktidentifikation auch eine möglichst charakteristische Geräteidentifikation ermittelt, die eine möglichst eindeutige Identifizierung der Kennzeichnungseinrichtung und/ oder der Erfassungseinrichtung erlaubt. Die erfasste Geräteidentifikation wird dann zusammen mit der Produktidentifikation in der Produktdatenbank als zusätzliches Produktattribut abgelegt, welches eine zusätzliche Information zu dem Kennzeichnungsprozess repräsentiert.

Da die Geräteidentifikation die verwendete Kennzeichnungsvorrichtung/Erkennungsvorrichtung der Herstellungsvorrichtung und insofern die Herstellungsvorrichtung weitgehend identifizierbar macht und zusammen mit der Produktidentifikation in der Produktdatenbank abgelegt wird, ist ein Einschleusen einer gefälschten Produktidentifikation in die Produktdatenbank oder ein Verwenden gefälschter Produktidentifikationen nicht mehr möglich, da gefälschte Produktidentifikationen nicht den oben genannten Verifikationsprozess des Erfassens der Produktidentifikation und Ermittelns der Geräteidentifikation durchlaufen und insofern nicht zusammen mit einer gültigen Geräteidentifikation in der Produktdatenbank abgelegt sein können. Ebenso wird das Entwenden einer echten Produktidentifikation zur Kennzeichnung eines gefälschten Produkts unterbunden, denn auch eine entwendete Produktidentifikation auf einem gefälschten Produkt durchläuft nicht den Verifikationsprozess und ist insofern auch nicht in der Produktdatenbank zusammen mit einer gültigen Geräteidentifikation verzeichnet.

Anhand eines in der Produktdatenbank abgelegten Datensatzes, bestehend aus eine Produktidentifikation und einer zugehörigen Geräteidentifikation, kann also festgestellt werden, ob und auf welcher Herstellungs- oder Kennzeichnungsvorrichtung das entsprechend gekennzeichnete (echte) Produkt den Verifikationsprozess durchlaufen hat. Das erfindungsgemäße Verfahren stellt also sicher, dass eine in der Produktdatenbank abgelegte Produktidentifikation tatsächlich von der durch die Geräteidentifikation bestimmten Kennzeichnungsvorrichtung bzw. deren Kennzeichnungs- und Erfassungseinrichtung auf ein echtes Produkt aufgebracht wurde.

Entsprechend umfasst eine Kennzeichnungsvorrichtung, die Teil einer Herstellungsvorrichtung sein kann, eine Kennzeichnungseinrichtung, eine Erfassungseinrichtung und eine Steuereinrichtung, die von einer Zentraleinrichtung eine eindeutige Produktidentifikation empfängt und an die Kennzeichnungseinrichtung zum Kennzeichnen des Produkts weitergibt sowie die von der Erfassungseinrichtung erfasste Produktidentifikation an die Zentraleinrichtung zum Ablegen in der Produktdatenbank zurückgibt. Erfindungsgemäß ermittelt die Steuereinrichtung die möglichst charakteristische Geräteidentifikation der Kennzeichnungseinrichtung und/oder der Erfassungseinrichtung und überträgt diese zusammen mit der Produktidentifikation an die Zentraleinrichtung zum Ablegen in der Produktdatenbank.

Vorzugsweise wird eine solche Geräteidentifikation ermittelt, die die Kennzeichnungseinrichtung und/oder die Erfassungseinrichtung im Wesentlichen eindeutig identifiziert, d.h. in der Regel eindeutig einer bestimmten Kennzeichnungseinrichtung und/oder Erfassungseinrichtung zugeordnet werden kann. Vorzugsweise erlaubt die Geräteidentifikation sogar die eindeutige Identifizierung aller eingesetzten Kennzeichnungseinrichtungen und/ oder Erfassungseinrichtungen.

Dabei kann eine charakteristische Geräteidentifikation ermittelt werden, die nur auf entweder die Kennzeichnungseinrichtung oder die Erfassungseinrichtung zurückzuführen ist, oder die auf beide Einrichtungen gleichermaßen zurückzuführen ist. Vorzugsweise wird die Geräteidentifikation im Rahmen des Erfassens der Produktidentifikation ermittelt, das heißt, dass die Steuereinrichtung die Geräteidentifikation der Kennzeichnungseinrichtung und/oder der Erfassungseinrichtung in einem hinreichenden zeitlichen Zusammenhang mit der Erfassung der Produktidentifikation auf dem Produkt ermittelt.

Die erfasste Produktidentifikation und die ermittelte Geräteidentifikation werden zum Ablegen in der Produktdatenbank von der Steuereinrichtung der Kennzeichnungsvorrichtung vorzugsweise derart verknüpft, dass weder die Produktidentifikation noch die Geräteidentifikation separat manipuliert werden kann. Dies kann beispielsweise durch Herstellen eines gemeinsamen Datensatzes erreicht werden, in den die Produktidentifikation und die Geräteidentifikation für Dritte nicht erkennbar und separierbar, z.B. verschlüsselt oder verwürfelt eingehen.

Vorzugsweise wird als Kennzeichnungseinrichtung ein Reproduktionsgerät verwendet, zum Beispiel ein Drucker oder dergleichen, das die erzeugte Produktidentifikation ausdruckt, damit sie auf das Produkt aufgebracht werden kann, z.B. durch Aufkleben, Aufheften oder dergleichen. Alternativ kann die Produktidentifikation auch direkt auf das Produkt aufgedruckt werden. Entsprechend wird als Erfassungseinrichtung vorzugsweise eine Abtasteinrichtung eingesetzt, zum Beispiel ein Scanner oder eine Kamera, die die auf dem Produkt aufgebrachte Produktidentifikation digital abtastet und in Form einer Datei bereitstellt, die an die Produktdatenbank übertragen werden kann. Hierbei ist die Produktidentifikation vorzugsweise eine eindeutige Kodierung, z.B. eine eindeutige Zeichen- oder Symbolkette, ein eindimensionaler oder zweidimensionaler Barcode, ein Datamatrix-Code oder dergleichen.

Die möglichst eindeutige Geräteidentifikation wird vorzugsweise aus einer charakteristischen Geräteeigenschaft des Reproduktionsgeräts/Abtastgeräts ermittelt, welche die Produktidentifikation beim Reproduzieren/ Abtasten beeinflusst. Dies können insbesondere Kennzahlen oder Parameter einer typischen statistischen Verteilung dieser charakteristischen Geräteeigenschaft sein. Derartige charakteristische Geräteeigenschaften können beispielsweise eine beim Reproduzieren/ Abtasten auftretende Farbcharakteristik der Reproduktion oder Rauschcharakteristik der Abtastsensoren sein oder eine charakteristische Verzeichnung bzw. Verzerrung der reproduzierten oder abgetasteten Produktidentifikation, eine Verkippung, die eine bestimmte Orientierung des Abtastgeräts in Bezug auf die abgetasteten Produktidentifikation angibt, oder dergleichen mehr.

Vorzugsweise wird die Geräteidentifikation der Kennzeichnungseinrichtung und/oder der Erfassungseinrichtung in einem vorgeschalteten Registrierungsprozess vorab ermittelt und als Referenzgerätidentifikation in der Produktdatenbank hinterlegt. Dadurch kann beim Ablegen einer beim Kennzeichnen eines neuen Produkts ermittelten Geräteidentifikation in der Produktdatenbank geprüft werden, ob für die betreffende Kennzeichnungseinrichtung und/oder Erfassungseinrichtung bereits eine im Wesentlichen übereinstimmende Referenzgeräteidentifikation in der Produktdatenbank vorliegt, so dass in diesem Fall von der Korrektheit der ermittelten Geräteidentifikation ausgegangen werden kann.

Ferner kann beim Ablegen einer Produktidentifikation in der Produktdatenbank auch geprüft werden, ob zu dem betreffenden Produkt überhaupt eine Geräteidentifikation vorliegt, um eingeschleuste oder gefälschte Produktidentifikationen zu erkennen, die nicht den Verifikationsprozess des Kennzeichnens des Produktes und Erfassens der Produktidentifikation durchlaufen haben.

Vorzugsweise wird das Kennzeichnen des Produkts und das Erfassen der auf dem Produkt aufgebrachten Produktidentifikation im Rahmen eines Herstellungsprozesses des Produktes durchgeführt, beispielsweise bei der Herstellung des Produktes selbst bzw. der Herstellung einer Umverpackung oder eines begleitenden Dokumentes des betreffenden Produkts, welches ebenfalls die Produktidentifikation tragen soll. Hierbei wird die Produktidentifikation vorzugsweise zentralisiert und separat von dem Herstellungsprozess und der Kennzeichnungsvorrichtung durch eine Zentraleinrichtung erzeugt. Die Zentraleinrichtung kann auch die Produktdatenbank umfassen.

Sofern die Zentraleinrichtung und die Herstellungsvorrichtung bzw. Kennzeichnungsvorrichtung separate und an verschiedenen Standorten befindliche Einheiten sind, stehen sie über ein Datenkommunikationsnetz in Datenkommunikation, z.B. zum Übertragen der erzeugten Produktidentifikation von der Zentraleinrichtung an die Kennzeichnungseinrichtung und der erfassten Produktidentifikation und ermittelten Geräteidentifikation von der Steuereinrichtung bzw. Erfassungseinrichtung an die Zentraleinrichtung bzw. deren Produktdatenbank.

Weitere Merkmale und Vorteile der Erfindung ergeben sich aus der folgenden Beschreibung von erfindungsgemäßen Ausführungsbeispielen sowie weiteren Ausführungsalternativen im Zusammenhang mit der einzigen Zeichnung, die das erfindungsgemäße Verfahren als Wechselwirkung zwischen einer Zentraleinrichtung und einer Kennzeichnungsvorrichtung illustriert.

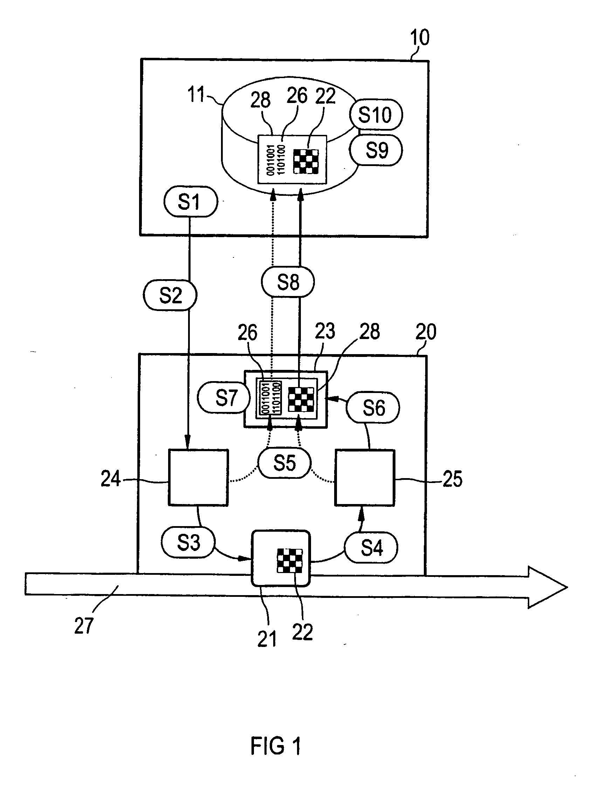

Figur 1 zeigt eine Anordnung zum Kennzeichnen von Produkten, bestehend aus einer Zentraleinrichtung 10 sowie einer Kennzeichnungsvorrichtung 20, die über geeignete Datenkommunikationsschnittstellen und ein Datenkommunikationsnetzwerk miteinander in Datenkommunikation treten können. Die Zentraleinrichtung umfasst im Wesentlichen eine Produktdatenbank 11 zum Speichern von produktspezifischen Daten, insbesondere von Produktdatensätzen 28, die zumindest eine dem jeweiligen Produkt 21 zugeordnete eindeutige Produktidentifikation 22 sowie eine Geräteidentifikation 26 umfassen.

Demgegenüber umfasst die Kennzeichnungsvorrichtung 20 zumindest eine Steuereinrichtung 23, ein Reproduktionsgerät 24 sowie ein Abtastgerät 25, die eine Kennzeichnung eines Produktes 21 im Rahmen eines Herstellungsprozesses 27 vornehmen. Sowohl die Zentraleinheit 10 als auch die Kennzeichnungsvorrichtung 20 umfassen die weiteren üblichen Komponenten und Hard- und Softwareeinheiten, die zu deren Betrieb benötigt werden, zum Beispiel Prozessoren, Bussysteme, Speichereinrichtungen und dergleichen. Derartige herkömmliche Komponenten werden hier nur insoweit erwähnt, als sie für die vorliegende Erfindung von Bedeutung sind. In diesem Zusammenhang kann zumindest die Steuereinrichtung 23 der Kennzeichnungsvorrichtung 20 als übliche Computereinrichtung ausgestaltet sein, die ihrerseits alle notwendigen Komponenten umfasst, um einerseits mit der Zentraleinheit 10 in Datenkommunikation zu treten, und andererseits eine Datenakquisition und einen Datenaustausch mit dem Reproduktionsgerät 24 und dem Abtastgerät 25 vorzunehmen.

Die Kennzeichnungsvorrichtung 20 kann Teil einer Herstellungsvorrichtung sein und als solches geeignet in einen Herstellungsprozess 27 integriert sein, in dessen Verlauf ein Produkt 21 zunächst produziert wird, dann durch die Kennzeichnungsvorrichtung 20 kennzeichnet und schließlich verpackt und zur Ausgabe an den Endkunden vorbereitet wird. Selbstverständlich kann die Kennzeichnungsvorrichtung 20 auch an jeder beliebigen anderen Stelle in einem Herstellungsprozess 27 angeordnet sein und gegebenenfalls mit weiteren bei der Herstellung des Produktes 21 benötigten Einrichtungen beliebig interagieren und/ oder mit ihnen verzahnt sein. Lediglich aus Übersichtlichkeitsgründen wird in Figur 1 die Kennzeichnungsvorrichtung 20 weitgehend isoliert von weiteren Herstellungsschritten und -einrichtungen dargestellt.

Zur Kennzeichnung des Produkts 21 wird in Schritt S1 eine eindeutige Produktidentifikation 22 von der Zentraleinrichtung 10, zum Beispiel von einem speziellen Generator, erzeugt, die prinzipiell eine beliebige digital auslesbare, eindeutige Kennzeichnung sein kann, zum Beispiel eine Zahlen- oder Zeichenkette oder ein graphischer Code, wie zum Beispiel ein Barcode, ein Datamatrix-Code oder dergleichen. In Schritt S2 wird die erzeugte Produktidentifikation 22 über eine geeignete Datenkommunikationsverbindung an das Reproduktionsgerät 24 der Kennzeichnungsvorrichtung 20 übertragen. Das Reproduktionsgerät 24 kann beispielsweise ein beliebiger Drucker sein, der nach einem beliebigen Druckverfahren arbeitet, beispielsweise ein Laserdrucker oder dergleichen. Insbesondere kann das Reproduktionsgerät 24 auch eine Einrichtung zum Erzeugen von optisch variablen Strukturen oder anderen als eindeutige Produktidentifikationen verwendbaren Sicherheitselementen sein, beispielsweise eine Stichtiefdruckeinrichtung, eine Prägeeinrichtung oder dergleichen.

In Schritt S3 wird die von dem Reproduktionsgerät 24 reproduzierte Produktidentifikation 22 schließlich auf dem Produkt 21 oder dessen Umverpackung möglichst derart angebracht, dass die Produktidentifikation 22 nicht ohne Zerstörung des Produkts 21 entfernt oder ausgetauscht werden kann. Die auf dem Produkt 21 angebrachte Produktidentifikation 22 wird anschließend in einem Verifikationsprozess (Schritte S4 bis S10) zum Zwecke der Registrierung des Produkts 21 und seiner Produktidentifikation 22 in der Produktdatenbank 11 von dem Abtastgerät 25 in Schritt S4 wieder erfasst. Das Abtastgerät 25 kann beispielsweise ein digitaler Scanner, eine digitale Kamera oder dergleichen sein, die eine möglichst hochwertige Kopie der Produktidentifikation 22 anfertigt, die anschließend in der Produktdatenbank 11 zusammen mit der Produktidentifikation 22 als Datensatz 28 abgelegt wird.

Der Vorgang des Aufbringens der Produktidentifikation 22 auf das Produkt 21 in Schritt S3 und des anschließenden Erfassens der aufgebrachten Produktidentifikation 22 dient der Verifikation der Produktidentifikation 22 in der auf dem Produkt 21 aufgebrachten und von einem Abtastgerät 25 erfassbaren Form, so dass sichergestellt wird, dass die Produktidentifikation 22 zukünftig abtastbar und auswertbar und insofern vergleichbar mit einer in der Produktdatenbank 11 abgelegten Produktidentifikation 22 ist. Dementsprechend wird abschließend in der Produktdatenbank 11 nicht die in Schritt S1 erzeugte ursprüngliche Produktidentifikation 22 abgelegt, sondern eine von dem Abtastgerät 25 erstellte Kopie der Produktidentifikation 22, die von der in Schritt S1 erzeugten Produktidentifikation 22 unter Umständen abweichen kann.

In Schritt S5 ermittelt die Steuereinrichtung 23 eine charakteristische, digitale Geräteidentifikation 26, die eine möglichst eindeutige Identifikation der Kennzeichnungsvorrichtung 20 bzw. ihres Reproduktionsgeräts 24 und Abtastgeräts 25 erlaubt. In die Geräteidentifikation 26 gehen insofern charakteristische technische oder sonstige Merkmale oder Eigenschaften des Reproduktionsgeräts 24 und Abtastgeräts 25 ein. Derartige charakteristische Eigenschaften der Geräte 24, 25 können prinzipiell beliebige charakteristische Geräteeigenschaften des Reproduktionsgeräts 24 und des Abtastgeräts 25 sein, die die Reproduktion der erzeugten Produktidentifikation 22 in Schritt S3 und/oder das Abtasten der aufgebrachten Produktidentifikation 22 in Schritt S4 auf charakteristische und reproduzierbare Weise beeinflussen, wie z.B. bestimmte Rausch- oder Farbcharakteristika oder Artefaktmuster, die bei der Reproduktion bzw. dem Abtasten der Produktidentifikation 22 von dem entsprechenden Gerät 24, 25 reproduzierbar erzeugt werden und als digitale oder numerische Information erfassbar sind.

So ist es beispielsweise möglich, geeignete Verteilungsparameter einer statistischen Verteilung von Farbartefakten bzw. farbraumbedingten Druckeigenschaften des Reproduktionsgeräts 24 zu ermitteln oder geeignete Verteilungsparameter einer statistischen Verteilung einer Rauschcharakteristik der Sensoren des Abtastgeräts 25, welche die abgetastete Produktidentifikation 22 reproduzierbar beeinflusst. Weitere derartige Geräteeigenschaften können charakteristische Verzeichnungen, beispielsweise Tonnen- oder Kissenverzeichnungen sein, Verkippungen des Abtastgeräts 25 gegenüber dem abzutastenden Produkt 21 oder dergleichen. Die genannten Verteilungsparameter können insofern die üblichen Parameter bekannter statistischer Verteilungen sein, beispielsweise Mittelwert und Varianz einer Gauß'schen Normalverteilung oder dergleichen. Derartige charakteristische Eigenschaften werden vorzugsweise sowohl an dem Reproduktionsgerät 24 als auch von dem Abtastgerät 25 erhoben und gehen in eine von der Steuereinrichtung 23 erzeugte Geräteidentifikation 26 gemeinsam ein.

Nachdem in Schritt S6 die erfasste Produktidentifikation 22 von dem Abtastgerät 25 an die Steuereinrichtung 23 übergeben wurde, verknüpft die Steuereinrichtung 23 in Schritt S7 die Produktidentifikation 22 und die Geräteidentifikation 26 des betreffenden Produkts 21 zu einem Produktdatensatz 28, um einen überprüfbaren Zusammenhang zwischen einem bestimmten Produkt 21 (über dessen Produktidentifikation) und der entsprechenden Kennzeichnungsvorrichtung 20 bzw. deren Reproduktionsgerät 24 und Abtastgerät 25 (über die Geräteidentifikation 26) herzustellen in Schritt S7.

Der Produktdatensatz 28 wird in Schritt S8 an die Zentraleinrichtung 10 bzw. deren Produktdatenbank 11 übertragen und dort in den Schritten S9 und S10 in der Datenbank 11 abgelegt, wodurch das Produkt 21 ordnungsgemäß registriert wird. Dazu wird in Schritt S9 eine Plausibilitätsprüfung des übertragenen Produktdatensatzes 28 durchgeführt, bei der beispielsweise geprüft wird, ob für eine eingehende Produktidentifikation 22 überhaupt eine entsprechende Geräteidentifikation 26 vorliegt, um auszuschließen, dass eine gefälschte Produktidentifikation 22, die nicht den Verifikationsprozess der Schritte S3, S4 durchlaufen hat, eingeschleust wird. Darüber hinaus kann die empfangene Geräteidentifikation 26 mit in der Produktdatenbank 11 vorliegenden Referenzgeräteidentifikationen (nicht dargestellt) verglichen werden, die vorab, beispielsweise bei einem Installations- oder Anmeldeprozess des Reproduktionsgeräts 24 bzw. des Abtastgeräts 25, erhoben wurden und in der Produktdatenbank 11 für den Prüfschritt S9 angelegt wurden. Dadurch kann sichergestellt werden, dass keine gefälschten Geräteidentifikationen 26 eingeschleust werden können. Sofern also keine Referenzgeräteidentifikation zu einer empfangenen Geräteidentifikation 26 in der Produktdatenbank 11 vorliegt, kann davon ausgegangen werden, dass die empfangene Produktidentifikation 22 und/oder die Geräteidentifikation 26 gefälscht und eingeschleust wurden.

Das abschließende Ablegen des Produktdatensatzes in der Produktdatenbank 11 wird dann in Schritt S10 erledigt. Durch die Verknüpfung einer eindeutigen Produktidentifikation 22 mit einer charakteristischen Geräteidentifikation 26 wird sichergestellt, dass in der Produktdatenbank 11 abgelegte Produktdätensätze 28 tatsächlich an der durch die Geräteidentifikation 26 eindeutig identifizierbaren Kennzeichnungseinrichtung 20 aufgebracht und verifiziert wurden. Es kann also sowohl die Echtheit des Produkts 21 als auch die Echtheit der Produktidentifikation 22 sichergestellt werden, so dass sowohl das Ausstatten eines gefälschten Produktes mit einer entwendeten, echten Produktidentifikation 22 ausgeschlossen werden kann (da der Registrierungsprozess S3, S4 hier nicht stattgefunden hat und demzufolge auch kein entsprechender Produktdatensatz 28 in der Produktdatenbank 11 vorliegen kann) als auch das Ausstatten eines echten Produkts 21 mit einer eingeschleusten, gefälschten Produktidentifikation 22.

In Schritt S7 kann die Verknüpfung der Produktidentifikation 22 und der Geräteidentifikation 26 durch die Steuereinrichtung 23 auch derart erfolgen, dass die beiden Identifikationen 22, 26 derart eng verknüpft bzw. miteinander verzahnt werden, dass einem entstehenden Produktdatensatz 28 die Produktidentifikation 22 bzw. die Geräteidentifikation 26 nicht einzeln entnommen werden können. Dadurch wird die Fälschungssicherheit der Produktidentifikation 22 weiter erhöht. Ebenso ist es in Schritt S5 möglich, dass genau solche charakteristische Geräteeigenschaften in die Geräteidentifikation 26 eingehen, die sich anhand der abgetasteten Produktidentifikation 22 verifizieren lassen. So können beispielsweise anhand einer abgetasteten Produktidentifikation 22 die Parameter einer Rauschverteilung zumindest geschätzt werden, die wiederum als charakteristische Geräteeigenschaft des Abtastgeräts 25 in die Geräteidentifikation 26 eingegangen sind. Auf diese Weise kann beispielsweise in Schritt S9 eine Plausibilitätsprüfung dahingehend erfolgen, ob die Produktidentifikation 22 zumindest prinzipiell mit der Geräteidentifikation 26 verknüpft sein kann, da gewisse Anteile der Geräteidentifikation 26 aus der Produktidentifikation 22 mittelbar oder unmittelbar hergeleitet werden können.

## Patentansprüche

1. Verfahren zum Kennzeichnen eines Produkts (21), umfassend die Schritte:
- Kennzeichnen (S3) des Produkts (21) mit einer Produktidentifikation (22) durch eine Kennzeichnungseinrichtung (24), wobei das Produkt (21) gekennzeichnet wird, indem eine digitale Produktidentifikation (22) erzeugt wird (S1) und durch ein Reproduktionsgerät (24) reproduziert und auf das Produkt aufgebracht wird (S3);
- Erfassen (S4) der Produktidentifikation (22) auf dem Produkt (21) durch eine Erfassungseinrichtung (25), wobei die Produktidentifikation (22) erfasst wird (S4), indem das gekennzeichnete Produkt (21) durch ein Abtastgerät (25) abgetastet wird (S4), um eine abgetastete, digitale Produktidentifikation (22) zu erzeugen; und
- Ablegen (S10) der erfassten Produktidentifikation (22) in einer Produktdatenbank (11);
wobei eine charakteristische Geräteidentifikation (26) der Kennzeichnungseinrichtung (24) und/ oder der Erfassungseinrichtung (25) ermittelt wird (S5) und zusammen mit der Produktidentifikation (22) in der Produktdatenbank (11) abgelegt wird (S10), wobei eine beim Reproduzieren/Abtasten (S3/S4) die reproduzierte/abgetastete Produktidentifikation (22) beeinflussende charakteristische Geräteeigenschaft des Reproduktionsgeräts/Abtastgeräts (24/25) als Geräteidentifikation (26) ermittelt wird (S5), insbesondere eine statistische Verteilung der charakteristischen Geräteeigenschaft., **dadurch gekennzeichnet, dass** eine beim Reproduzieren/Abtasten (S3/S4) auftretende Rauschcharakteristik, Farbcharakteristik, charakteristische Verzeichnung, Verzerrung und/oder Verkippung als charakteristische Geräteidentifikation (26) ermittelt wird (S5).

2. Verfahren nach Anspruch 1, **dadurch gekennzeichnet, dass** die Geräteidentifikation (26) derart ermittelt wird (S5), dass anhand der Geräteidentifikation (26) die Kennzeichnungseinrichtung (24) und/ oder die Erfassungseinrichtung (25) im Wesentlichen eindeutig identifiziert werden kann.

3. Verfahren nach Anspruch 1 oder 2, **dadurch gekennzeichnet, dass** die Geräteidentifikation (26) im Rahmen des Erfassens (S4) der Produktidentifikation (22) ermittelt wird (S5) und mit der erfassten Produktidentifikation (22) zum Ablegen (S10) in der Produktdatenbank (11) derart verknüpft wird (S7), dass weder die Produktidentifikation (22) noch die Geräteidentifikation (26) separat manipulierbar sind.

4. Verfahren nach Anspruch 3, **dadurch gekennzeichnet, dass** das Produkt (21) mit einem eindeutigen Codewort, einem Barcode oder einem Datamatrix-Code (22) als Produktidentifikation (22) gekennzeichnet wird (S3).

5. Verfahren nach einem der Ansprüche 3 bis 4, **dadurch gekennzeichnet, dass** die Geräteidentifikation (26) der Kennzeichnungseinrichtung (24) und/ oder der Erfassungseinrichtung (25) vorab ermittelt und als Referenzgeräteidentifikation in der Produktdatenbank (11) abgelegt wird.

6. Verfahren nach Anspruch 5, **dadurch gekennzeichnet, dass** beim Ablegen (S10) einer ermittelten Geräteidentifikation (26) in der Produktdatenbank (11) geprüft wird (S9), ob für die betreffende Kennzeichnungseinrichtung (24) und/oder Erfassungseinrichtung (25) bereits eine im Wesentlichen übereinstimmende Referenzgeräteidentifikation in der Produktdatenbank (11) vorliegt.

7. Verfahren nach einem der Ansprüche 3 bis 6, **dadurch gekennzeichnet, dass** das Kennzeichnen (S3) des Produkts durch die Kennzeichnungseinrichtung (24) und das Erfassen (S4) der Produktidentifikation (22) durch die Erfassungseinrichtung (25) im Rahmen eines Herstellungsprozesses (27) des Produkts (21) erfolgt.

8. Verfahren nach Anspruch 7, **dadurch gekennzeichnet, dass** das Erzeugen (S1) der Produktidentifikation (22) und das Ablegen (S10) der Produktidentifikation (22) in der Produktdatenbank (11) getrennt von einem Herstellungsprozess (27) des Produkts (21) durch eine Zentraleinrichtung (10) erfolgt, wobei die erzeugte Produktidentifikation (22) von der Zentraleinrichtung (10) an die Kennzeichnungseinrichtung (24) und die erfasste Produktidentifikation (22) von der Erfassungseinrichtung (25) an die die Produktdatenbank (11) umfassende Zentraleinrichtung (10) elektronisch übertragen wird (S2, S8).

9. Verfahren nach einem der Ansprüche 1 bis 8, **dadurch gekennzeichnet, dass** beim Ablegen (S10) einer Produktidentifikation (22) in der Produktdatenbank (11) geprüft wird (S9), ob zu dem betreffenden Produkt (21) auch eine Geräteidentifikation (26) abgelegt wird.

10. Kennzeichnungsvorrichtung (20), umfassend eine Kennzeichnungseinrichtung (24), die eingerichtet ist, ein hergestelltes Produkt (21) mit einer eindeutigen Produktidentifikation (22) zu kennzeichnen, indem eine digitale Produktidentifikation (22) erzeugt wird und durch ein Reproduktionsgerät (24) reproduziert und auf das Produkt aufgebracht wird, eine Erfassungseinrichtung (25), die eingerichtet ist, die Produktidentifikation (22) auf dem gekennzeichneten Produkt (21) zu erfassen, indem das gekennzeichnete Produkt (21) durch ein Abtastgerät (25) abgetastet wird, um eine abgetastete, digitale Produktidentifikation (22) zu erzeugen, und eine Steuereinrichtung, (23) die eingerichtet ist, die Produktidentifikation (22) von einer Zentraleinrichtung (10) zu empfangen und die erfasste Produktidentifikation (22) an die Zentraleinrichtung (10) zum Ablegen in einer Produktdatenbank (11) zu übertragen, wobei die Steuereinrichtung (23) weiterhin eingerichtet ist, eine charakteristische Geräteidentifikation (26) der Kennzeichnungseinrichtung (24) und/ oder der Erfassungseinrichtung (25) zu ermitteln und zusammen mit der Produktidentifikation (22) an die Zentraleinrichtung (10) zum Ablegen in der Produktdatenbank (11) zu übertragen,
wobei die Steuereinrichtung (23) weiter eingerichtet ist, eine beim Reproduzieren/Abtasten die reproduzierte/abgetastete Produktidentifikation (22) beeinflussende charakteristische Geräteeigenschaft des Reproduktionsgeräts/Abtastgeräts (24/25) als Geräteidentifikation (26) zu ermitteln, insbesondere eine statistische Verteilung der charakteristischen Geräteeigenschaft, dadurchgekennzeichnet, dass die Steuereinrichtung eingerichtet ist, eine beim Reproduzieren/Abtasten auftretende Rauschcharakteristik, Farbcharakteristik, charakteristische Verzeichnung, Verzerrung und/oder Verkippung als charakteristische Geräteidentifikation (26) zu ermitteln.

11. Kennzeichnungsvorrichtung (20) nach Anspruch 10, **dadurch gekennzeichnet, dass** die Kennzeichnungsvorrichtung (20) eingerichtet ist, in Wechselwirkung mit der die Produktdatenbank (11) umfassenden Zentraleinrichtung (10) ein Verfahren nach einem der Ansprüche 1 bis 13 durchzuführen.

## Claims

1. A method for marking a product (21) comprising the steps of:
- marking (S3) the product (21) with a product identification (22) by a marking unit (24), wherein the product (21) is marked by a digital product identification (22) being produced (S1), and reproduced by a reproduction device (24) and applied (S3) to the product;
- capturing (S4) the product identification (22) on the product (21) by a capture unit (25), wherein the product identification (22) is captured (S4) by the marked product (21) being scanned (S4) by a scanning device (25) so as to produce a scanned, digital product identification (22); and
- storing (S10) the captured product identification (22) in a product database (11);
wherein a characteristic device identification (26) of the marking unit (24) and/ or of the capture unit (25) is determined (S5) and stored (S10) in the product database (11) together with the product identification (22), wherein there is determined (S5) as the device identification (26) a characteristic device property of the reproduction device/ scanning device (24/ 25) that influences the reproduced/ scanned product identification (22) upon reproducing/ scanning (S3/ S4), in particular a statistical distribution of the characteristic device property, **characterized in that** there is determined (S5) as the characteristic device identification (26) a noise characteristic, color characteristic, characteristic distortion, deformation and/ or tilting that occurs upon reproducing/ scanning (S3/ S4).

2. The method according to claim 1, **characterized in that** the device identification (26) is determined (S5) in such a fashion that the marking device (24) and/ or the capture unit (25) can be identified substantially uniquely by means of the device identification (26).

3. The method according to claim 1 or 2, **characterized in that** the device identification (26) is determined (S5) within the framework of capturing (S4) the product identification (22), and is connected (S7) in such a fashion with the captured product identification (22) for storing (S10) in the product database (11) that neither the product identification (22) nor the device identification (26) can be manipulated separately.

4. The method according to claim 3, **characterized in that** the product (21) is marked (S3) with a unique code word, a bar code or a data matrix code (22) as product identification (22).

5. The method according to any of the claims 3 to 4, **characterized in that** the device identification (26) of the marking unit (24) and/ or of the capture unit (25) is determined in advance and stored as reference device identification in the product database (11).

6. The method according to claim 5, **characterized in that** upon storing (S 10) a determined device identification (26) in the product database (11) it is checked (S9) whether there already exists in the product database (11) a substantially consistent reference device identification for the marking unit (24) and/ or capture unit (25) in question.

7. The method according to any of the claims 3 to 6, **characterized in that** the marking (S3) of the product by the marking unit (24) and the capturing (S4) of the product identification (22) by the capture unit (25) take place within the framework of a manufacturing process (27) of the product (21).

8. The method according to claim 7, **characterized in that** the producing (S1) of the product identification (22) and the storing (S 10) of the product identification (22) in the product database (11) are effected by a central unit (10) separately from a manufacturing process (27) of the product (21), wherein the produced product identification (22) is electronically transmitted (S2) by the central device (10) to the marking device (24), and the captured product identification (22) is electronically transmitted (S8) by the capture device (25) to the central device (10) comprising the product database (11).

9. The method according to any of the claims 1 to 8, **characterized in that** upon storing (S10) a product identification (22) in the product database (11) it is checked (S9) whether there is also stored a device identification (26) associated with the product (21) in question.

10. A marking device (20), comprising a marking unit (24) that is adapted to mark a manufactured product (21) with a unique product identification (22), by a digital product identification (22) being produced, and reproduced by a reproduction device (24) and applied to the product, a capture unit (25) that is adapted to capture the product identification (22) on the marked product (21) by the marked product (21) being scanned by a scanning device (25) so as to produce a scanned, digital product identification (22), and a control unit (23) that is adapted to receive the product identification (22) from a central unit (10) and to transmit the captured product identification (22) to the central unit (10) for storing in a product database (11), wherein the control unit (23) is further adapted to determine a characteristic device identification (26) of the marking unit (24) and/ or of the capture unit (25) and to transmit said device identification together with the product identification (22) to the central unit (10) for storing in the product database (11), wherein the control unit (23) is further adapted to determine as the device identification (26) a characteristic device property of the reproduction unit/ scanning unit (24/ 25) that influences the reproduced/ scanned product identification (22) upon reproducing/ scanning, in particular a statistical distribution of the characteristic device property, **characterized in that** the control unit is adapted to determine as the characteristic device identification (26) a noise characteristic, color characteristic, characteristic distortion, deformation and/ or tilting that occurs upon reproducing/ scanning.

11. The marking device (20) according to claim 10, **characterized in that** the marking device (20) is adapted to carry out, in interaction with the central unit (10) comprising the product database (11), a method according to any of the claims 1 to 13.

## Revendications

1. Procédé de marquage d'un produit (21), comprenant les étapes:
- marquage (S3) du produit (21) avec une identification (22) de produit par l'intermédiaire d'un équipement de marquage (24), le produit (21) étant marqué, ce qui a lieu en ce qu'une identification numérique (22) de produit est générée (S1) et reproduite par un appareil de reproduction (24) et appliquée (S3) sur le produit;
- saisie (S4) de l'identification (22) de produit sur le produit (21) par un équipement de saisie (25), l'identification (22) de produit étant saisie (S4) en ce que le produit (21) marqué est balayé (S4) par un appareil de balayage (25) pour générer une identification numérique (22) balayée de produit; et
- stockage (S10) de l'identification saisie (22) de produit dans une banque de données (11) de produit;
une identification (26) caractéristique d'appareil de l'équipement de marquage (24) et/ou de l'équipement de saisie (25) étant déterminée (S5) et stockée (S10) conjointement avec l'identification (22) de produit dans la banque de données (11) de produit, une propriété caractéristique d'appareil de l'appareil de reproduction/de l'appareil de balayage (25/24) influençant lors de la reproduction/du balayage (S3/S4) l'identification (22) de produit reproduite/balayée étant déterminée (S5) en tant qu'identification (26) d'appareil, notamment une répartition statistique de la propriété caractéristique d'appareil, **caractérisé en ce qu'**une caractéristique de bruit, caractéristique de couleur, distorsion caractéristique, déformation et/ou basculement survenant lors de la reproduction/du balayage (S3/S4) est déterminé(e) (S5) en tant qu'identification (26) caractéristique d'appareil.

2. Procédé selon la revendication 1, **caractérisé en ce que** l'identification (26) d'appareil est déterminée (S5) de telle sorte que, au moyen de l'identification (26) d'appareil, l'équipement de marquage (24) et/ou l'équipement de saisie (25) peut être identifié de manière essentiellement univoque.

3. Procédé selon la revendication 1 ou 2, **caractérisé en ce que** l'identification (26) d'appareil est déterminée (S5) dans le cadre de la saisie (S4) de l'identification (22) de produit et est, pour le stockage (S10) dans la banque de données (11) de produit, combinée (S7) de telle sorte avec l'identification (22) de produit saisie que ni l'identification (22) de produit, ni l'identification (26) d'appareil ne sont manipulables séparément.

4. Procédé selon la revendication 3, **caractérisé en ce que** le produit (21) est marqué (S3) avec un mot-code univoque, un code-barres ou un code Datamatrix (22) en tant qu'identification (22) de produit.

5. Procédé selon une des revendications de 3 à 4, **caractérisé en ce que** l'identification (26) d'appareil de l'équipement de marquage (24) et/ou de l'équipement de saisie (25) est préalablement déterminée et stockée en tant qu'identification de référence de l'appareil dans la banque de données (11) de produit.

6. Procédé selon la revendication 5, **caractérisé en ce que**, lors du stockage (S10) d'une identification déterminée (26) d'appareil dans la banque de données (11) de produit, il est vérifié (S9) si, pour l'équipement de marquage (24) et/ou l'équipement de saisie (25) en question, il y a déjà une identification de référence de l'appareil essentiellement correspondante dans la banque de données (11) de produit.

7. Procédé selon une des revendications de 3 à 6, **caractérisé en ce que** le marquage (S3) du produit par l'équipement de marquage (24) et la saisie (S4) de l'identification (22) de produit par l'équipement de saisie (25) a lieu dans le cadre d'un processus de fabrication (27) du produit (21).

8. Procédé selon la revendication 7, **caractérisé en ce que** la génération (S1) de l'identification (22) de produit et le stockage (S10) de l'identification (22) de produit dans la banque de données (11) de produit a lieu par un équipement central (10) séparément d'un processus de fabrication (27) du produit (21), l'identification (22) de produit générée étant électroniquement transmise (S2, S8) par l'équipement central (10) à l'équipement de marquage (24) et l'identification (22) de produit saisie étant électroniquement transmise par l'équipement de saisie (25) à l'équipement central (10) englobant la banque de données (11) de produit.

9. Procédé selon une des revendications de 1 à 8, **caractérisé en ce que**, lors du stockage (S10) d'une l'identification (22) de produit dans la banque de données (11) de produit, il est vérifié (S9) si, pour le produit (21) en question, une identification d'appareil (26) est aussi stockée.

10. Dispositif de marquage (20), comprenant un équipement de marquage (24) qui est configuré pour marquer avec une identification (22) univoque de produit un produit (21) fabriqué, ce qui a lieu en ce qu'une identification numérique (22) de produit est générée et reproduite par un appareil de reproduction (24) et appliquée sur le produit, un équipement de saisie (25) qui est configuré pour saisir l'identification (22) de produit sur le produit (21) marqué, ce qui a lieu en ce que le produit (21) marqué est balayé par un appareil de balayage (25) pour générer une identification numérique (22) balayée de produit, et un équipement de commande (23) qui est configuré pour recevoir l'identification (22) de produit provenant d'un équipement central (10) et pour transmettre l'identification (22) de produit saisie à l'équipement central (10) pour le stockage dans une banque de données (11) de produit, l'équipement de commande (23) étant en outre configuré pour déterminer une identification (26) caractéristique d'appareil de l'équipement de marquage (24) et/ou de l'équipement de saisie (25) et pour transmettre ladite identification, conjointement avec l'identification (22) de produit, à l'équipement central (10) pour le stockage dans la banque de données (11) de produit, l'équipement de commande (23) étant en outre configuré pour déterminer en tant qu'identification (26) d'appareil une propriété caractéristique d'appareil de l'appareil de reproduction/de l'appareil de balayage (24/25) influençant lors de la reproduction/du balayage l'identification (22) de produit reproduite/balayée, notamment une répartition statistique de la propriété caractéristique d'appareil, **caractérisé en ce que** l'équipement de commande est configuré pour déterminer en tant qu'identification (26) caractéristique d'appareil une caractéristique de bruit, caractéristique de couleur, distorsion caractéristique, déformation et/ou basculement survenant lors de la reproduction/du balayage.

11. Dispositif de marquage (20) selon la revendication 10, **caractérisé en ce que** le dispositif de marquage (20) est configuré pour exécuter en interaction avec l'équipement central (10) englobant la banque de données (11) de produit un procédé selon une des revendications de 1 à 13.
